# EUROPEAN PATENT SPECIFICATION

(11) **EP 0 953 033 B1**
(45) Date of publication and mention of the grant of the patent: **13.04.2005**
(21) Application number: 97912007.8
(22) Date of filing: 13.11.1997
(51) Int. Cl.: C10L 11/02, C10L 11/04, C10L 5/40

(54) **COMBUSTIBLE FUEL SOURCE**
BRENNSTOF
SOURCE DE COMBUSTIBLE

(30) Priority: 13.11.1996 CA 2190233
(43) Date of publication of application: 03.11.1999
(73) Proprietor: Manner, D., Lee, Ontario P1B 8G4 (CA)
(72) Inventor: Manner, D., Lee, Ontario P1B 8G4 (CA)
(74) Representative: Cawdell, Karen Teresa
(86) International application number: PCT/CA1997/000857
(87) International publication number: WO 1998/021296

(56) References cited:
- DE-A- 3 008 644
- FR-A- 970 708
- FR-A- 1 555 995
- FR-A- 2 601 381
- GB-A- 131 472
- GB-A- 609 069
- US-A- 1 496 314
- US-A- 2 107 054
- US-A- 2 170 326
- US-A- 3 536 615

## Description

The present invention relates to a combustible fuel source. More specifically, the present invention relates to a novel combustible fuel source which is relatively clean burning, safe and environmentally friendly.
Combustible fuel sources abound and include a wide range of sources, from the common, such as fire wood, to the high tech such as the solid fuel rockets. While many combustible fuel sources exist, it is desired to have a substantially clean burning fuel source which is inexpensive, safe, convenient to use and which uses readily available materials.
It is also desirable to use high temperature combustion burning to destroy waste products which pose a threat to the environment. In particular, high temperature combustion of environmentally hazardous or detrimental waste is desirable if it can be accomplished with minimal acceptable emissions.
Combustible fuel sources are known from GB-A-131472, GB-A-609069, FR-A-2601381, US-A-2 107054 and US-A-2170326. GB-A-131472 discloses a block made of fire brick clay which is dipped into an oily or greasy fluid. GB-A-609069 and US-A-2107 054 disclose a liquid fuel being used to bind a flammable material, whereas US-A-2170326 discloses the use of a flammable material and a liquid fuel being compressed together. A further fuel source is disclosed in FR-A-2601381 where the organic matter is impregnated with a flammable liquid. Such prior art fuel sources are disadvantageous as they tend to become unstable when warmed to a temperature sufficient to cause the binder to liquify; they therefore lose their mechanical integrity and tend to crumble, which is particularly disadvantageous.
According to a first aspect of the present invention, there is provided a combustible fuel source as manufactured according to appended claim 6.

In another aspect, the porous carrier is formed into a preselected shape depending on its intended purpose and required combustion characteristics. The preselected shape will to a large extent depend on its intended purpose. Examples of suitable preselected shapes include cones, rings, blocks, powdered granules or pellets, candles, balls and sticks.

According to a further aspect, there is also provided a thin layer of a combustible fuel source that is applied to an object. The thin layer of combustible fuel source provides a heat source for that object.

In another aspect, a combustible fuel source is provided which further comprises a combustion initiating means. In a particular embodiment of the invention, the combustion initiating means may comprise a combustion wick which is ignited to initiate combustion of said fuel source.

In another aspect, said fuel source further comprises an ignition means adjacent said combustion initiating means such that ignition of said ignition means ignites said combustion initiating means which, in turn, ignites said solid fuel.

In a further aspect of the invention, a combustible fuel source is provided which further comprises waste material or recovery blends which are combusted together with the solid fuel source. Examples of such waste material include railway "ties", telephone poles, creosote, calcium oxalate, powdered coal, waste material from the forestry and pulp and paper industries, and sludge wastes from wastewater treatment plants.

In another aspect, there is provided a combustible fuel source which can be applied to an oil spill in the water to combust said oil spill.

In another aspect, there is provided a combustible fuel source which can be burned in a low ventilated container to create a low burning smoke which acts as an insect repellent.

In another aspect of the invention natural waste products may be incorporated into the combustible fuel sources. In particular, garden waste, including natural fibres such as leaves, pine needles, grass clippings and natural cloth fibres may be incorporated into the porous carrier or natural wastes produced from industrial processing, such as fish fat from fish processing plants, or animal fat from slaughter houses could be incorporated into the solid fuel.

According to a further aspect of the present invention, there is provided a method of making a combustible fuel source as set form in claims 1-5. Preferably step(a) is soaking paper in water to form the first intermediate.

The term "impregnated into said porous carrier" includes, among other things, coated, saturated, covered, permeated and any other means of combining the fuel source with the porous carrier to achieve a combustible fuel source of the invention.
Preferred embodiment of the present invention will now be described, by way of example only, with reference to the attached Figures, wherein:
FIGURE 1A is an illustration of a combustible fuel source in accordance with an embodiment of the present invention;
FIGURE 1B is an illustration of an inverted conical combustible fuel source of an embodiment of the present invention and an illustration of a cylindrical combustible fuel source of an embodiment of the present invention in which the process of fuel vaporization and combustion is illustrated.
FIGURE 2 is an illustration of a combustible fuel source in accordance with another embodiment of the present invention:
Figure 3 is an illustration of shows a section taken through line 3-3 of Figure 2;
Figure 4 is an illustration of a partially cut away combustible fuel source in a stove in accordance with another embodiment of the present invention;
Figure 5 is an illustration of a combustible fuel source in accordance with another embodiment of the present invention for use in wood or coal furnaces and the like; and
Figure 6 is an illustration of an improved match which includes a fuel source in accordance with another embodiment of the present invention;
Figure 7 is an illustration of a combustible fuel source applied as a thin layer to a cooking pot in accordance with another embodiment of the present invention.
Figure 8 is an illustration of a wood pellet combustible fuel source in accordance with another embodiment of the present invention.

### DETAILED DESCRIPTION OF THE INVENTION

In Figure 1A there is illustrated an embodiment of the combustible fuel source in accordance with the present invention. The combustible fuel source is indicated generally at 20. The combustible fuel source 20 is shown resting on support surface 27. Fuel source 20 comprises a body 24 formed of a porous carrier and a solid fuel. The exposed surface 26 on the body 24 is where the combustion largely takes place and is termed the combustion surface.

As used herein, the term 'porous' is intended to comprise any carrier structure which is substantially porous to vapours of the vaporized solid fuel permitting vapours from solid fuel which is vaporized within body 24 to move to the exterior of body 24 to combustion surface 26.

As shown in Figure 1A, in a present embodiment, body 24 is shaped in the general form of a truncated cone and includes, at the apex of the cone, a combustion initiating means, such as wick 28, and an ignition means, such as a safety match 32 which is partially embedded into body 24 adjacent wick 28.

It should be noted that wick 28 is only provided to ease the initiation of combustion of fuel source 20 and wick 28 need not be provided in circumstances wherein other means of initiating combustion of fuel source 20 are available. In fact, when provided, wick 28 is generally quite short in length and will only burn for a relatively short period of time. Similarly, safety match 29 is only provided as a convenience and safety match 29 need not be provided in circumstances wherein other means of igniting fuel source 20 are available.

It should also be noted that fuel source 20 is not limited to a body of generally conical shape and other shapes may be employed as desired. As will be described below, combustion of fuel source 20 involves a surface effect and thus different shapes provide different combustion characteristics. For example, a generally conical shape has a large surface area and provides relatively large amounts of heat, but burns correspondingly quicker than shapes with relatively smaller exposed surface areas which provide relatively less heat but burn slower and accordingly longer for the same volume of material.

In one embodiment, the porous carrier of body 24 comprises cellulose fibres. Specifically, body 24 comprises paper pulp which has been formed into the desired shape and dried. It has been found that the selection of the paper pulp influences the combustion properties of fuel source 20. In particular, paper pulp of relatively course fibres results in a fast and hot combustion relative to that obtained from fuel source 20 when paper pulp of relatively finer fibres is employed. Other suitable porous materials include cloth, ground coal or charcoal. It is believed that finer paper fibres provide a slower burn because the porous carrier is more dense and less permeable to the vapours so the vapours travel more slowly through the body 24 to the combustion surface 26.

Since a combustible porous carrier is used there is added energy which is given off in the combustion of the product since the carrier is combusted. After combustion of a combustible fuel source having a combustible porous carrier, the remaining ash is lightweight and easily disposed.

While not completely understood, it is presently believed that two factors generally influence the performance of the porous carrier in combustible fuel sources in accordance with the present invention. These two factors are (i) the ability of vaporized fuel and oxygen to move through the porous carrier; and (ii) the ability of the porous carrier to transfer heat from the combustion surface 26 into body 24 to vaporize the solid fuel. In addition, selection of the porous carrier will affect the ash remaining after the fuel source has combusted. For example, use of a combustible material as a porous carrier will result in little waste materials (ash) and a second combustion stage while use of non-combustible materials will result in more waste material and no second combustion stage, as described below.

Although it has not been conclusively determined, it is believed that the combustible fuel source has a very efficient and effective combustion as a result of the mechanism of action described below. In particular, the initial combustion on the surface of the porous carrier carries heat inwards towards the centre of the combustible fuel source where the solid fuel is liquefied (if the fuel is not in liquid form), vaporized and transported to the surface of the porous carrier where it is combusted. The process of liquefying, vaporizing and transporting the vaporized fuel to the surface is termed osmosis. It is believed that this osmosis occurs simultaneously while oxygen is drawn into the porous carrier and then into the vaporized solid fuel and as such the oxygen is then carried with the vapour to the surface of the carrier to be combusted.

As the surface of the porous carrier is carbonised by the increasing heat from the surface combustion, the situation described above generally becomes more efficient. It is believed that the increased efficiency is due to the increasing carbonised surface which contains no solid fuel to impede the osmosis occurring, allowing an increasing blend of oxygen and vaporized fuel. When the solid fuel nears exhaustion, the centre of the porous carrier achieves a high temperature and begins to cause the porous carrier to "coal". As surface combustion of the vaporized fuel expires, it is believed that there is a cooler area within the porous carrier between the coal centre and the carbonised surface which will smolder for a short time. It has also been observed at this stage that there appears to be a release of a white vapour of water. As the coal centre takes over the combustion of the remaining material of the porous carrier, if it is a combustible porous carrier, the carbonised carrier is able to realize a complete combustion initiated from the centre of the carrier or the coal centre.

Based on this theory of the mechanism of action of the combustible fuel source of the present invention, the combustible fuel source is believed to be combusted in two stages. First, there is the osmosis of the solid fuel wherein the heat from the combustion travels towards the centre of the body vaporizing the fuel which then moves to the surface where it is combusted while oxygen is simultaneously drawn into the vaporized fuel and then to the combustion surface where it also is consumed in the combustion. Second, if the porous carrier is combustible, the porous carrier will begin to combust from the centre of the body outwards. During both the first and second stage, the combustible fuel source generally remains intact and the only notable change from an external visual examination is the shrinkage of the carrier. However, if the combustible fuel source is handled it will disintegrate revealing a very fine ash similar to the waste material achieved by a "kiln" disposition of similar material.

It is believed that the ability of oxygen to permeate the carrier and then be combusted on the surface with the vaporized fuel is one of the reasons for the very efficient and effective combustion of the combustible fuel source.

Furthermore, because the combustion process uses oxygen very effectively, the combustion can be stopped almost instantly by the elimination of the oxygen during the first stage of combustion. If it is desirable to stop combustion in the second stage of the burn, it is necessary to restrict the oxygen for a more extended period of time. Although surface combustion expires immediately, the coal effect continues to maintain high heat and when using a combustion chamber the fuel must cool before oxygen is re-introduced or the combustion may resume on the surface of the fuel. This aspect of the efficient use of oxygen also allows for added safety when using the fuel. For example, a chimney fire can be subdued quickly by restricting oxygen to the fuel within the combustion chamber, the resulting burst of vapour will generally suffocate the flames in the chimney.

The solid fuel of body 24 is paraffin wax or beeswax. In combustion, portions of the solid fuel are first liquefied and then vaporized for combustion. As will be apparent, the porous carrier serves to hold liquefied fuel and to allow the vaporized fuel to move through the carrier to the combustion surface 26

While waxes or the like are presently preferred for convenience, cost and environmental considerations, it is presently believed that the only required criteria for the solid fuel is that it can be vaporized by the heat present within body 24 when fuel source 20 is being combusted and that its vapours can move through the porous carrier to the combustion surface.

The manufacture of fuel source 20 of Figure 1A has been performed in the following manner. The porous carrier is formed from paper which is soaked in water and coarsely macerated to obtain paper pulp which is then pressed into a generally conical shape and dried. The dried, formed porous carrier is then emersed into liquid paraffin wax or beeswax. The carrier absorbs the liquefied wax until it is saturated and then the porous carrier is removed from the liquefied wax and set aside to allow the wax to solidify on the porous carrier to obtain body 24.

When solidified, a small bore can be formed in top of body 24 and wick 28 inserted into the bore and bonded in place with a drop of liquid wax. It should be noted that, as mentioned above, wick 28 is optional and when provided is only employed to initiate combustion of fuel source 20. Thus, wick 28 need not penetrate body 24 to any great extent and a penetration of a half inch or less has been found to be satisfactory. When wick 28 has been placed, another small bore can be formed into the top of body 24, adjacent wick 28, to receive safety match 29. As also mentioned above, safety match 29 is also optional and need not be included. It will also be apparent to those of skill in the art that the present invention is not limited to the use of safety matches and that these are merely preferred for safety reasons and that other ignition devices can be employed if desired.

Ignition of fuel source 20 is easily accomplished by igniting wick 28, if present, or otherwise heating a portion of body 24 and igniting the resulting vaporized solid fuel on the combustion surface 26. When first lit, combustion occurs only in the area adjacent the point of ignition. However, as the solid fuel adjacent the combustion area is heated, vaporized and combusted, combustion spreads to substantially the entire exposed combustion surface 26 of body 24, namely, all of the surface except the base which is effectively smothered by the support surface 27 on which it rests. The base of the body 24 when in contact with the support surface 27 does not achieve surface combustion but generally is effectively consumed by the coal, second stage combustion, if the porous carrier is combustible.

It should be noted that combustion of fuel source 20 appears to be largely a surface effect and it has been noted in tests that solid fuel which has been liquefied but not vaporized and which has leeched out of body 24 and onto the support surface 27 does not tend to ignite.

Fuel source 20 has been tested using various porous carriers. Tests were conducted using combustible porous carriers with coarse paper and fine paper. In one test the relatively course paper employed in egg crates was used as the porous carrier and this has resulted in a relatively hot and quick combustion. The course paper used in egg crates is essentially any over-processed wood fibre or short fibre like Krofta Fines, which are expelled during the manufacturing process of wood fibres to achieve fluff pulp. Fluff pulp is used in environmentally friendly diapers and feminine napkins. Because there is a portion of the wood fibre which becomes to short through breakage in manufacturing to be utilized in the machinery used to manufacture fluff pulp, it is dropped from the process as waste.

In another test, finer paper, newsprint, was used as the porous carrier. Newsprint is a finer paper because the wood strand is long and is still considered to be a quality material. The finer paper resulted in a relatively less hot but longer burning combustion. In both cases, it should be noted that the combustion of fuel source 20 appeared to be particularly efficient, with little, if any, soot being produced.

As best understood, in the present invention the porous carrier apparently transports the solid fuel which has been vaporized from within body 24 to the combustion surface 26 of body 24 wherein combustion is occurring. It is presently believed that the relative coarseness of the porous carrier regulates the speed with which this transport occurs and thus is one of the limiting factors in the combustion process. It is also believed that the porous carrier serves to assist heat transfer from the combustion surface 26 into body 24 to promote vaporization of the solid fuel and that the porous carrier allows for air to be drawn into body 24 below the combustion surface 26 to facilitate clean and complete combustion.

Although it is not necessary that the product be conical, the conical shape has a number of positive implications. First, the shape allows for maximum stability as a freestanding form.

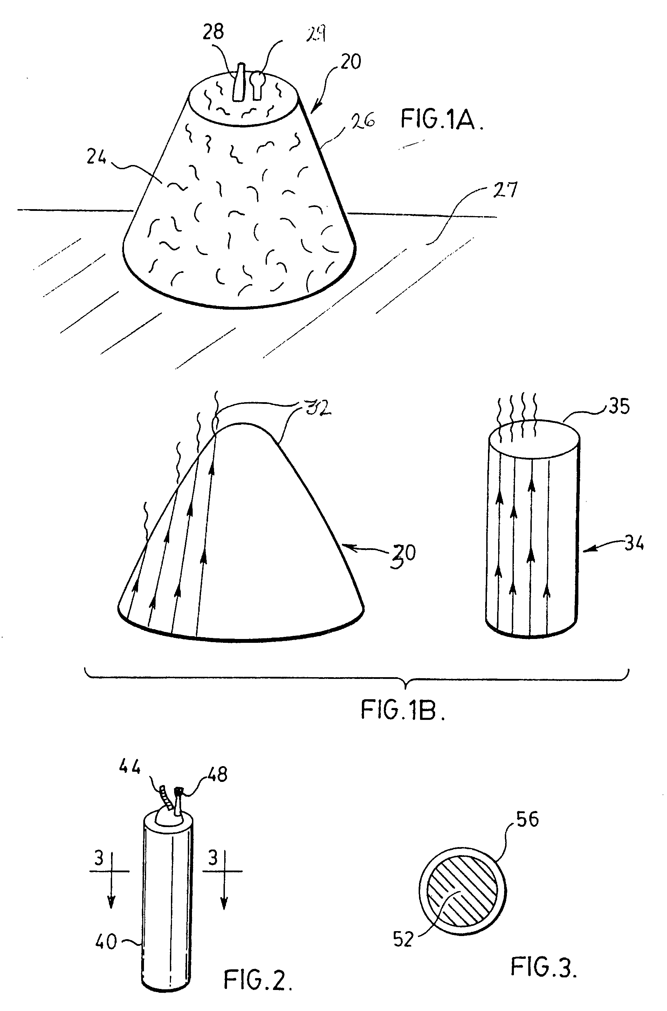

Second, the conical shape also allows for a more efficient combustion at the maximum surface area while having the aforementioned stability. Referring to Figure 1B, the tendency is for the osmosis to occur straight up and combust at the top of the porous carrier of the inverted cone 30 and over the somewhat horizontal surface area 32. Thus, if the combustible fuel source is in the shape of a cylinder 34 as opposed to an inverted cone 30, as illustrated in Figure 1B, it would achieve a slower combustion since the combustion surface area 35 would be much less.

Third, the conical shape speeds the spread of ignition over the entire exposed surface of the unit as the narrow top of the cone warms quickly fuelling more heat to quickly heat the wider body near the bottom of the cone.

Fourth, the more efficient shape allows less vapour to escape before complete combustion can occur. When the sides of the carrier are straight up as in the cylindrical combustible fuel source 34, there are bursts of vaporized fuel which escape outside the area of combustion but with the conical shape 30 the entire exposed horizontal surface area 32 is involved in combustion so that more of the vapour is utilized in the combustion. This effect has been observed for wood fibre carriers and pumice carriers.

Another property of combustible fuel source 20 is that the porous carrier substantially retains its shape and cohesiveness throughout substantially the entire combustion period of combustible fuel source 20. This is believed to be due to the vaporized solid fuel which moves through the porous carrier to the combustion surface 26, the vapours apparently serving to assist the porous carrier in retaining its structure until the solid fuel is exhausted. The porous carrier is aided in retaining its shape by the carbon ash produced during combustion of the solid fuel. This occurs at the surface of the carrier and builds towards the centre of the carrier while osmosis is progressing outwardly from the interior of the carrier. Accordingly, it is believed that, for a short time, both stages of combustion are occurring. As the carbon builds at the surface, the carbon molecules continue to effectively bond the carrier's particles together. This simplifies clean up and disposal of the spent fuel source 20.

The embodiment of the present invention shown in Figure 1A is presently preferred for use as a fire starter by hikers, campers and the like and it is believed will start a campfire of wood even if the wood is wet. For example, as discussed below with reference to Figures 2 and 3, the present invention can be used in candles and the like.

Figures 2 and 3 show another embodiment of the present invention which is useful as a candle, torch or the like. Fuel source 40 is generally cylindrical and, in a similar fashion to fuel source 20 described above, can include an initiation means, such as wick 44, and an ignition means, such as safety match 48.

As shown in Figures 2 and 3, fuel source 40 includes a cylindrical body 52 which comprises a porous carrier and a solid fuel and also preferably includes an outer sheath 56 formed of a less porous carrier and/or a denser solid fuel. Sheath 56 has been found to encourage the combustion of fuel source 40 at the upper end of the cylinder and to inhibit the spread of combustion of fuel source 40 from the upper end to the side walls of the cylinder by providing a relatively impermeable barrier to vaporized solid fuel.

In one embodiment of fuel source 40 of Figures 2 and 3, body 52 is formed in the same manner as that described above for fuel source 20 illustrated in Figure 1A, with the pulp of relatively coarse paper fibres being formed into a cylindrical shape, rather than a conical shape, and liquid wax being subsequently impregnated into the dried carrier and allowed to solidify. Sheath 56 is then formed from paper, such as newsprint, which is rolled relatively tightly about body 52 and then dipped briefly into liquid wax. When the wax of sheath 52 has solidified, a bore is formed in the upper end of fuel source 40 and wick 44 can be inserted and/or a bore is formed in the upper end of fuel source 40 and a safety match 48 can be inserted.

In tests, body 52 has been formed of relatively coarse paper fibres from paper egg crates and impregnated with beeswax and sheath 56 has been formed of rolled newsprint which is then impregnated with paraffin wax. This combination has been found to provide a relatively hot flame which is well contained by the paraffin wax in sheath 56. Other combinations have also been successfully tried, including body 52 being formed from rolled newsprint and impregnated with beeswax or paraffin wax and sheath 52 constructed as before.

It should be noted that, as was the case with fuel source 20, wick 44 is only provided, if at all, to simplify the initiation of combustion of fuel source 40. Thus it is not required that wick 44 extend along body 52 to any extent beyond that desired to achieve the desired initiation of combustion and a wick of a half inch or less will generally be sufficient. However, if it is desired to enhance the ease with which fuel source 40 may be re-lit, wick 44 can extend along the majority of body 52 and can be used to re-light fuel source 40. Wick 44 is only necessary if the combustible fuel source is used as a flame source as in a candle. The wick 44 may be a cotton fibre wick or any other appropriate wick.

In a similar fashion, safety match 48 is not required and is only provided if desired. If safety match 48 is not provided, any suitable ignition means may be employed.

Also, as mentioned above, the cohesiveness of the porous carrier in fuel source 40 is augmented by the solid fuel vapours which move through the porous carrier and thus fuel source 40 typically does not drop ash or other waste while combustion is occurring.

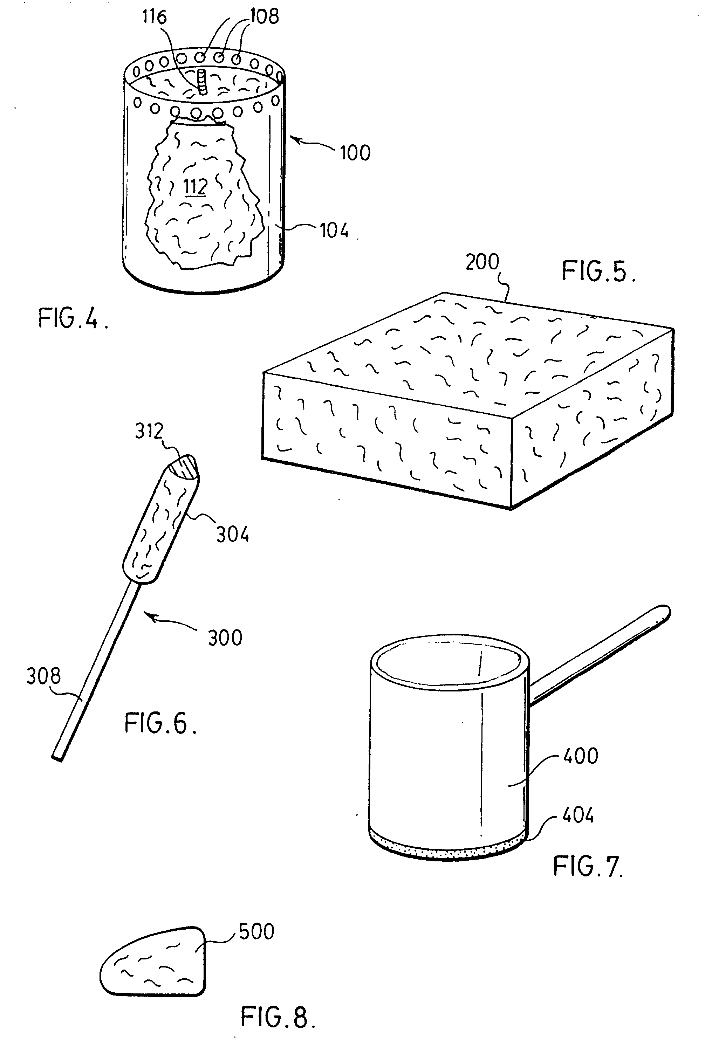

Figure 4 illustrates another embodiment wherein a stove 100 employs a fuel source in accordance with the present invention. Stove 100 comprises an outer shell 104 which, is an aluminium or steel food or beverage can which has been recycled. As shown in Figure 4, the top has been removed from shell 104 and a series of ventilation holes 108 have been placed around the upper edge of shell 104. A fuel source 112 in accordance with the present invention is placed within shell 104 and a bore is formed in the upper surface of fuel source 112 and a wick 116 inserted therein.

The shell 104 provides a support surface on which cooking utensils and pots may be placed and also permits the combustible fuel source 112 to contain a greater than 100% saturation of solid fuel in the porous carrier to increase the energy life of the product.

As with other embodiments of the present invention, fuel source 112 comprises a porous carrier and a solid fuel. Several varieties of porous carrier have been successfully tested to date, including the above-mentioned relatively coarse paper fibres from paper egg crates which have been soaked and macerated into a pulp which is shaped, pressed and dried. This carrier was then emersed in liquefied paraffin wax until it is impregnated with wax. Stove 100 with such a fuel source 112 has been found to provide sufficient heat to boil a pot of water resting on the upper edge of stove 100 in a reasonably quick manner. It has also been determined that, once the combustion process is fully established in fuel source 112, stove 100 is substantially wind proof or resistant to being extinguished by wind currents and as such it is difficult to extinguish by any means other than smothering stove 100.

Another embodiment which was tested for use with stove 100 was a porous carrier formed from tightly rolled corrugated cardboard which was placed in the stove with the channels formed by the corrugations of the cardboard being oriented vertically. Liquefied paraffin wax was then poured into the stove 100 until the porous core would not accept more wax. This embodiment of stove 100 has been found to provide a hot and relatively large flame, the combustion process apparently being augmented by vaporized wax which travels relatively quickly and easily along the above-mentioned channels. As with the other embodiments of stove 100, this embodiment can be difficult to extinguish other than by smothering as it is substantially wind proof.

Generally, the preference is to use a 50% blend of wax with the secondary solid fuel chosen. Moreover, it is preferred to use wax in outdoor products intended to be carried in clothing prior to use.

As with the other embodiments wick 116 is not required and other suitable means of initiating combustion can be employed as will occur to those of skill in the art. Or in the alternative, the combustible fuel source may simply be ignited by holding the surface close to an open flame.

In another embodiment shown in Figure 5, fuel source 200 is configured into a block configuration for use in a wood or coal-fired stove or furnace. Other configurations could also be used such as a slab, log or brick-like configuration. Fuel source 200 comprises a porous carrier and a solid fuel, as before. Representative examples of suitable porous carriers include paper fibres formed and dried as described above. The solid fuel used in fuel source 200 is paraffin wax or beeswax.

It is contemplated that in such general heating applications, it may be desirable to limit the area of the combustion surface to reduce the combustion rate; In such cases, fuel source 200 can first be placed in a shield, such as a metal pan (not shown), which closely matches the outside dimensions of fuel source 200 and which serves to limit combustion surface to the upper surface 202 of fuel source 200 and to inhibit combustion from occurring on the sides. To inhibit combustion on the sides of the combustible fuel source 200 it is desirable to place the shield in close proximity to the combustible fuel source 200.

For example, it has been found that if the shield is placed one half inch from the sides of fuel source 200 then combustion of the side of the fuel source 200 is substantially prevented. It is not necessary to put the shield in contact with the sides of fuel source 200.

In a test, a fifteen inch by twelve inch by four inch fuel source 200 comprising a porous carrier formed from tightly wound bristle board (fine cardboard) impregnated with paraffin wax and placed in a shield, as described above, was combusted in a wood burning furnace. Fuel source 200 was found to burn in the furnace for approximately twenty-four hours and to provide the equivalent amount of heat as a medium sized wood fire. In this test, the combustion of the wax appeared to be sufficiently complete that no substantial amount of harmful chimney deposits were visually detected.

Figure 6 shows another embodiment wherein an improved match 300 includes a fuel source 304 in accordance with the present invention. In this embodiment, fuel source 304 comprises a porous carrier and solid fuel, as before, which has been bonded to a carrier stick 308. Carrier stick 308 can be formed of combustible materials such a wood or paper like a conventional match, or can be formed of incombustible materials such as metal of glass if desired. A conventional match-type ignition composition 312 is located at the tip of fuel source 304 such that, when appropriately struck, composition 312 ignites initiating combustion of fuel source 304. It is contemplated that, in some circumstances, it may be desirable to include a wick (not shown) extending from fuel source 304 into composition 312 to assist in the initiation of combustion of fuel source 304. As match 300 combusts fuel source 304, rather than carrier stick 308 as in a conventional match, it is contemplated that match 300 will provide a longer burn time and/or a greater heat supply and, like other embodiments, this embodiment can be difficult to extinguish other than by smothering.

Further, match 300 is presently believed to be an effective method of initiating combustion in fuel sources in accordance with the present invention wherein a wick is not provided. The substantial heat developed by match 300 and its relatively long burn time are advantageous for this purpose.

Figure 7 is an illustration of a cooking pot 400 which has a layer of combustible fuel source 404 adhered to the bottom thereof. When the layer of combustible fuel source 404 is appropriately ignited using ignition means the combustible fuel source 404 burns heating the pot 400 and thereby cooking whatever is contained within the pot. The length of cooking required will determine the thickness of the layer of the combustible fuel source.

Figure 8 illustrates a wood pellet combustible fuel source 500. Wood pellets can be used a fuel enhancer. In a preferred embodiment, the wood pellet is a blend of powdered bark and a powdered blend of wood/paper pulp and fat product. The powdered blend is heat compressed with the powdered bark which acts as a bonding agent. (See Example 4)

All of the above embodiments exemplified in the Figures may also contain waste materials or recovery blends. A recovery blend is any material which would be potentially toxic if eaten, potentially toxic to the environment and/or are considered waste materials. For example, a clean fibre such as recycled non-toxic paper that has only been exposed to vegetable dyes is a natural blend not a recovery blend. Recovery blends include any material which may not be safe. In the case of cloth fibre, this material would not be considered a recovery blend if natural plant fibre was processed into the carrier and there were no toxic dyes in its composition. On the other hand, coloured or chemically treated cloth fibres may be recovered efficiently by the process but could not be considered non-toxic prior to combustion and therefore are a recovery blend.

The recovery blends may be incorporated into the porous carrier or the solid fuel. The general rule is that any material that can be blended with the oil or liquid wax and will pass thought the surface of the porous carrier is introduced into the solid fuel saturation process and the others are introduced into make up of the porous carrier.

Recovery blends that are incorporated into the combustible fuel source achieve a more complete and efficient combustion.

The waste material can be processed into a powder and then blended with the wood/paper pulp. The blend is then pressed into the preselected shape to form the porous carrier, as discussed above.

Alternatively, the waste material can be blended with powdered fibre material, termed flash powder, and then using dry heat compression the porous carrier can be formed to achieve the desired shape. (See Example 4) The flash powder is generally obtained from the waste created in the manufacturing process of a combustible fuel source of the present invention. In particular, the waste created when a fuel block or other preselected shape has been cut to size.

In a particular embodiment, the flash powder could be introduced to a waste material such as an oil spill and when lit, the flash powder together with the oil will combust. This may be done on the water and the flash powder will not absorb the water, but will immediately absorb the oil. Once the oil has been absorbed, the oil laden flash powder will continue to remain buoyant and can easily be removed from the water for transport to a remote location and combusted there or can be combusted on the surface of the water and the material remains after the burn is solid and wax-like and is easily removed form the water's surface and continues to remain buoyant. The emissions from the combustion are minimized due to the efficient combustion characteristics of the flash powder.

In a further alternative, the waste material could form the porous carrier by itself without a further fibre carrier. In this latter process, the waste material would be powdered and pressed into the appropriate shape.

Waste materials which have been employed include railway "ties", telephone poles, creosote, powdered coal, calcium oxalate solids, krofta fines, bark, wood/paper and ink waste stream material from recycled paper industry. In addition waste sludge from waste water treatment plants may also be appropriate material to include in the porous carrier.

Waste materials which are not detrimental to the environment but are often placed in household waste, including garden waste which may be incorporated into the porous carrier, including leaves, pine needles, grass clippings and natural cloth fibres. In addition certain, natural wastes created in industrial processing, such as fish processing plants which produce fish fat as waste, or slaughter houses which produce animal fat as waste, could be incorporated into the combustible fuel source of the invention.

It has also been observed that when the combustible fuel source of the present invention is combusted insects are repelled from an area around said combustion. It is believed that the vapour expelled during combustion of the combustible fuel source of the present invention contains as aspect of biological material which interferes with the ability of the insect to locate a food source and as a result the insect relocates to a remote area away from the combustion site. In particular, this has been observed with mosquitoes and blackflies. It has been further observed that the mosquitoes and blackflies will not return to the combustion site for several days.

The following examples are further illustrations of particular embodiments of the combustible fuel source of the invention or processes for producing such embodiments.

### Example 1: Combustible Fuel Source comprising a Porous Carrier from Wood Fibre

When wood fibre is pulped for purposes of paper production, the wood fibre is broken down to different degrees. The most desirable situation to make paper resulting from the pulping procedures are long strand wood fibres. The long strands are dense and less porous than short strands and when integrated during paper production the long strands cling to each other producing a quality paper having strength, durability and slight water resistance. The more the wood strands are processed, the more broken they become resulting in shorter, more porous wood strands. The shorter wood strands are less durable and quite absorbent. The resulting implications are that the less desirable over-processed wood fibre is not a viable material for paper production, as each processing of the wood fibre leaves the strand shorter and eventually negates any value for its use in paper. This short strand material is very absorbent and will not readily combust on its own but provides a suitable porous carrier when combined with a solid fuel of the present invention.

The more processed the wood fibre is the more absorbent the fibre becomes and the more absorbent the fibre becomes the greater the amount of fuel which will be retained in the porous carrier. This will result in a combustible fuel source which will produce more energy on combustion.

On the other hand, the less refined, longer strands of fibre will absorb and retain less solid fuel but there will be greater area between the strands to allow for rapid heating of the carrier and a less restricted combustion process of the solid fuel resulting in a quick, high heat, but a longer porous carrier life due to the density of the individual strands. Essentially, the opposite is true for shorter more absorbent strands, wherein the combustible fuel source comprised of shorter strands will retain more fuel but the area between the strands is less. As a result, the porous carrier comprised of short strands will have a slower and longer first stage combustion process then the porous carrier comprised of longer strands which will have a longer second stage combustion.

The short strand fibre when employed in a combustible fuel source of the invention in a preselected shape having a thickness greater than 5" begins to affect the efficiency of combustion of the solid fuel in open air combustion. The short strand fibre porous carrier having a thickness greater than 5" is a tight fibre porous carrier which as it is carbonised to this thickness the combustion is decreasing with concomitant decreasing energy. As a result, less heat from the combustion is reaching the solid fuel and it begins to restrict the osmosis of the solid fuel while interfering with the efficient delivery of oxygen to the solid fuel being vaporized within the carrier. In particular, there is a greater area of cool down between the coal centre where the fuel vaporizes and the surface combustion and as a result, the period of time where vapour is expelled is extended. Accordingly, this short strand product is not as effective for high intense combustions. On the other hand, when this same product is disposed within a suitable combustion chamber, the reflective nature of the heat within the chamber effectively negates this concern.

Whether a short strand or long strand wood fibre is incorporated into the porous carrier, either can be incorporated using a wet compression method. The wet compression method, as described above for Figure 1A, encompasses soaking the wood fibre in water and compressing the wood fibre into the desired shape and then letting the wood fibre dry.

### Example 2: Combustible Fuel Source comprising Wood Fibre Fluff using a Steam Process

Dry wood/paper pulp can be ground or finely shredded to wood fibre fluff. The resulting wood fibre fluff can b compressed to the desired shape and then steam can be forced into the compressed fluff form. The steam causes the wood fibres to bind together and in this manner the carrier form is achieved. The advantage of this process is a greatly reduced drying time is required to form the carrier prior to saturation with the chosen solid fuel. It is understood that a similar method is employed in some processes for making particular types of fibre containers, including egg cartons.

### Example 3: Combustible Fuel Source comprising a Porous Carrier obtained from a Sheet Layering Process

The porous carrier may also be formed by taking thin sheets of porous wood fibre, such as balsa wood, or sheets of paper or cardboard and layering these sheets to the desired thickness and then using any method desired to apply even pressure. This pressure need only be great enough to secure continuous contact between each layer of fibre sheets. The porous carrier may then be introduced to the liquefied fuel until the fibre is completely saturated with the fuel. The resulting carrier would then be removed from the fuel and the fuel would be allowed to solidify, if it was to be a solid fuel, before, the chosen method of compression would be removed.

### Example 4: Fuel Pellets and Dry Heat Compression

Dry heat compression can be used to bond two or more different materials using a powdered combustible fuel source of the present invention termed flash powder. The flash powder acts as a bonding agent. For example, dry powdered tree bark blended with flash powder to create a high energy recovery blend fuel pellet.

The flash powder is generally obtained from the waste created in the manufacturing process of a combustible fuel source of the present invention. In particular, the waste created when a fuel block or other preselected shape has been cut to size. This flash powder is then blended with the desired amount of powdered bark. This bark/flash powder blend is then compressed into a heated metal or stone form, at temperatures generally from 200 to 400 degrees Fahrenheit, which form represents the desired shape and sized of the finished fuel product. Very quickly the fuel components in the flash powder liquefy and while liquefied and under pressure, quickly penetrate the bark powder. The form or pellet is then expelled from the heated form and cooled to solidify the material into a solid unit such as a pellet.

The dry heat compression is the most desirable method of manufacturing fuel pellets, which are approximately 1-2 cm in thickness and 1 and 1/2 cm in length. It should be noted that pellets may be manufactured from other materials other than bark, including calcium oxalate solids.

The above mentioned methods of production may also be combined. One could use flash powder, dry wood/paper fibre fluff and dry heat compression to achieve the desired form. In another process, steam heat compression could be used to create a form using a blend of wood/paper fibre fluff and powdered bark. In another process, layered sheets of paper or porous wood fibre could be compressed using pressure and steam and then allowing this material to dry while pressure is continued. Once dried it is saturated with the chosen fuel source. These are alternative process in addition to the wet fibre compression method early described.

Any of these methods of manufacturing may be employed as long as the density of the carrier and the thickness of the finished product can be achieved as required for the specific product to provide the appropriate combustion characteristics of the fuel source of this invention.

### Example 5: Combustible Fuel Source incorporating Coal as a Recovery Blend

When recovery blends such as powdered coal are used, the coal realized a more complete and efficient combustion by this union. There are two methods by which this recovery is done. First, the powdered coal is blended with the porous carrier and then continues through to the manufacturing process, through compression to acquire shape, then curing, then fuel saturation.

Second, another procedure for recovery of coal is to take a briquetted of the powdered coal and cover this with a jacket of the porous carrier. The unit is then dried and subsequently saturated with fuel.

The powdered coal is combusted much more efficiently when incorporated into a combustible fuel source of the invention. Much of the air borne emissions expelled from the burning material occurs when an incomplete combustion is allowing combustible materials to be expelled into the air for example, there is inefficient smoldering of the charcoal for upwards of an hour which can occur with barbequing with coal/charcoal briquettes and which causes the release of undesirable combustion by-products into the air.

Not only does the combustion achieve efficient combustion on the surface of the charcoal, but the jacket remains intact as carbon on the surface and effectively filters minute particles of the coal that otherwise would become air borne. As the surface is heating these particles are thereby combusted. In addition, if barbequing with these products, any fat dripping onto the fuel from the food is dispensed thought the carbonised jacket and combusted as well. This minimizes "flare-ups".

The powdered charcoal formed into a combustible fuel source would act as part of the porous carrier. However, a unit of coal would not be considered itself to be a porous carrier.

The above-described embodiments of the invention are intended to be examples of the present invention and alterations and modifications may be effected thereto, by those of skill in the art, without departing from the scope of the invention which is defined solely by the claims appended hereto.

## Claims

1. A method of manufacturing a combustible fuel source which method includes:
a) soaking paper or wood fibre in water to form a first intermediate;
b) macerating the first intermediate to form a pulp;
c) drying the pulp to form a porous carrier body;
d) impregnating the porous carrier body with a liquefied paraffin wax or beeswax; and
e) solidifying the liquefied paraffin wax or beeswax on the porous carrier body.

2. A method according to claim 1, wherein the porous carrier body is immersed in the liquefied paraffin wax or bees wax.

3. A method according to claim 1 or 2, wherein the porous carrier body is saturated with the paraffin wax or beeswax.

4. A method according to any preceding claim, which further comprises blending a powdered waste material with the pulp prior to step c), wherein the waste material is selected from one or more of the following waste materials: railway "ties", telephone poles, creosote, powdered coal, calcium oxalate-solids, krofta fines or bark, wood/paper, ink waste stream material from recycled paper industry, waste sludge from waste water treatment plants, garden waste (including leaves, pine needles, grass clippings), natural cloth fibres, waste from fish processing plants which produce fish fat as waste, or waste from slaughter houses which produce animal fat as waste.

5. A method according to any preceding claim, wherein step a) is soaking paper in water to form the first intermediate.

6. A method according to any preceding claim wherein the pulp is shaped and pressed prior to step c).

7. A combustible fuel source which is manufactured according to any preceding claim.

## Patentansprüche

1. Verfahren zum Herstellen einer brennbaren Brennstoffquelle, wobei das Verfahren beinhaltet:
a) Einweichen von Papier oder Holzfasern in Wasser, um ein erstes Zwischenprodukt zu bilden;
b) Mazerieren des ersten Zwischenprodukts, um einen Brei zu bilden;
c) Trocknen des Breis, um einen porösen Trägerkörper zu bilden;
d) Imprägnieren des porösen Trägerkörpers mit einem verflüssigten Paraffinwachs oder Bienenwachs; und
e) Verfestigen des verflüssigten Paraffinwachs oder Bienenwachs auf dem porösen Trägerkörper.

2. Verfahren gemäß Anspruch 1, bei dem der poröse Trägerkörper in das verflüssigte Paraffinwachs oder Bienenwachs eingetaucht wird.

3. Verfahren gemäß Anspruch 1 oder 2, bei dem der poröse Trägerkörper mit dem Paraffinwachs oder Bienenwachs gesättigt wird.

4. Verfahren gemäß einem der vorstehenden Ansprüche, welches ferner das Vermischen eines gepulverten Abfallstoffes mit dem Brei vor Schritt c) umfasst, bei dem der Abfallstoff von einem oder mehreren der folgenden Abfallstoffe ausgewählt wird: Eisenbahnschwellen, Telefonmaste, Kreosot, gepulverte Kohle, Kalzium-Oxalat-Feststoffe, Krofta-Feinanteile oder -Rinde, Holz / Papier, Tintenabfallströmungsmaterial aus der Papierrecyclingindustrie, Abfallschlamm aus Abwasserreinigungsanlagen, Gartenabfall (einschließlich Blätter, Kiefemnadeln, Grasschnitt), natürliche Stofffasern, Abfall aus Fischverarbeitungsanlagen, die Fischfett als Abfall produzieren, oder Abfall aus Schlachthäusern, die Tierfett als Abfall produzieren.

5. Verfahren gemäß einem der vorstehenden Ansprüche, bei dem Schritt a) das Einweichen von Papier in Wasser zum Bilden des ersten Zwischenprodukts ist.

6. Verfahren gemäß einem der vorstehenden Ansprüche, bei dem der Brei vor Schritt c) geformt und gepresst wird.

7. Brennbare Brennstoffquelle, die gemäß einem der vorstehenden Ansprüche hergestellt ist.

## Revendications

1. Procédé de fabrication d'une source de combustible, ledit procédé comprenant :
a) le trempage de papier ou de fibre du bois dans de l'eau pour former un premier intermédiaire ;
b) la macération du premier intermédiaire pour former une pulpe ;
c) le séchage de la pulpe pour former un corps de support poreux ;
d) l'imprégnation du corps de support poreux avec une cire de paraffine liquéfiée ou une cire d'abeille ; et
e) la solidification de la cire de paraffine liquéfiée ou de la cire d'abeille sur le corps de support poreux.

2. Procédé selon la revendication 1, dans lequel le corps de support poreux est immergé dans la cire de paraffine liquéfiée ou la cire d'abeille.

3. Procédé selon la revendication 1 ou 2, dans lequel le corps de support poreux est saturé de cire de paraffine ou de cire d'abeille.

4. Procédé selon l'une des revendications précédentes, qui comprend en outre le mélange d'un matériau de déchet en poudre avec la pulpe avant l'étape c), dans lequel le matériau de déchet est sélectionné parmi un ou plusieurs des matériaux de déchet suivants ; "traverses" de voie de chemin de fer, poteaux de téléphone, créosote, charbon pulvérisé, solides d'oxalate de calcium, fines de Krofta ou écorces, bois/papier, matériaux du flux de déchets d'encre de l'industrie du papier recyclé, boues issues des installations de traitement des eaux, déchets de jardinage (y compris feuilles, aiguilles de pin, tontes d'herbe), fibres naturelles de tissu, déchets d'unités de transformation du poisson produisant des graisses de poisson comme déchets, ou déchets d'abattoirs produisant des graisses animales comme déchets.

5. Procédé selon l'une des revendications précédentes, dans lequel l'étape a) est le trempage de papier dans de l'eau pour former le premier intermédiaire.

6. Procédé selon l'une des revendications précédentes, dans lequel une pulpe est formée et comprimée avant l'étape c).

7. Source de combustible qui est fabriquée selon l'une des revendications précédentes.
